(19) Europäisches Patentamt
European Patent Office
Office européen des brevets

(11) **EP 2 108 005 B1**

(12) **FASCICULE DE BREVET EUROPEEN**

(45) Date de publication et mention
de la délivrance du brevet:
**11.04.2018 Bulletin 2018/15**

(21) Numéro de dépôt: **07858144.4**

(22) Date de dépôt: **26.12.2007**

(51) Int Cl.:
*B01D 21/00* *(2006.01)*    *B01D 21/06* *(2006.01)*
*B01D 21/08* *(2006.01)*    *C02F 1/00* *(2006.01)*
*C02F 1/52* *(2006.01)*     *C02F 1/66* *(2006.01)*
*C02F 9/00* *(2006.01)*     *C02F 1/28* *(2006.01)*
*C02F 1/38* *(2006.01)*     *C02F 1/42* *(2006.01)*

(86) Numéro de dépôt international:
**PCT/EP2007/064547**

(87) Numéro de publication internationale:
**WO 2008/083923 (17.07.2008 Gazette 2008/29)**

(54) **PROCEDE ET INSTALLATION DE TRAITEMENT D'EAU PAR FLOCULATION LESTEE ET DECANTATION**

VERFAHREN UND VORRICHTUNG ZUR VERABEITUNG VON WASSER DURCH BALLASTIERTE AUSFLOCKUNG UND ABSCHEIDUNG

METHOD AND PLANT FOR PROCESSING WATER BY BALLASTED FLOCCULATION AND DEPOSITION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.12.2006 FR 0611562**

(43) Date de publication de la demande:
**14.10.2009 Bulletin 2009/42**

(73) Titulaire: **Veolia Water Solutions & Technologies Support**
**94410 Saint-Maurice (FR)**

(72) Inventeurs:
• **SAUVIGNET, Philippe**
**F-35460 Saint-Etienne En Cogles (FR)**

• **DAHL, Claus**
**DK-2640 Hedehusene (DK)**
• **URSEL, Valey**
**F-93320 Les Pavillons Sous Bois (FR)**
• **LEVECQ, Céline**
**75020 Paris (FR)**
• **BEAUDET, Jean-François**
**Montreal, Québec H1Y2Z3 (CA)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 0 707 520**    **WO-A-01/40121**
**WO-A-98/14258**      **WO-A-03/053862**

## Description

La présente invention concerne le domaine du traitement de l'eau.

Le traitement des eaux, principalement la potabilisation des eaux et le traitement d'eaux usées urbaines ou industrielles à dépolluer, utilise fréquemment un procédé consistant à coaguler l'eau à traiter chargées en impuretés avec un réactif coagulant souvent constitué d'un sel de métal trivalent, à floculer l'eau coagulée avec un réactif floculant constitué usuellement d'un polymère organique, et à décanter les flocs formés dans un décanteur, les boues étant extraites en partie basse de décanteur, et l'eau traitée extraite en partie haute de décanteur.

Une telle technique permet de débarrasser les eaux traitées de leurs impuretés colloïdales, dissoutes ou en suspension et constituées de matières organiques, de micropolluants de micro-organismes notamment.

L'invention traite plus particulièrement de la technologie dite de floculation-décantation à flocs lestés, qui met en oeuvre un ballast constitué d'un matériau granulaire fin et de forte densité tel que du microsable par exemple, injecté dans la zone de floculation, afin d'augmenter la vitesse de formation des flocs en servant d'initiateur de floculation, et également d'augmenter par accroissement de leur densité la vitesse de décantation des flocs formés durant la phase de floculation, ce qui permet de diminuer la taille des ouvrages.

En pratique, l'eau coagulée est mise en contact dans un réacteur avec un réactif floculant, tel qu'un polymère, et un ballast, et intimement mélangée à ceux-ci grâce à des moyens d'agitation. Le temps de contact de l'eau avec le floculant et le ballast doit être suffisant pour permettre la formation et l'augmentation de taille des flocs constitués par les impuretés agrégées grâce au floculant autour du ballast.

Le microsable, de diamètre moyen compris entre 20 et 400 micromètres environ, 80 et 300 micromètres le plus souvent, est le ballast utilisé le plus fréquemment pour des raisons de disponibilité et de coût.

La technologie de floculation décantation lestée est notamment décrite dans les brevets suivants :

- la demande de brevet FR-A-2627704 publiée le 1er septembre 1989 ;
- la demande de brevet FR-A-2719234 publiée le 3 novembre 1995.

Dans une telle technologie, le ballast est usuellement séparé des boues extraites de l'ouvrage de décantation pour pouvoir être recyclé, grâce à des moyens de recirculation, dans le procédé.

Lors du recyclage une part infime du ballast part avec les boues. Il est donc nécessaire d'injecter périodiquement du ballast neuf destiné à compenser les fuites de ballast.

Les fuites en ballast entraîné avec les boues sont importantes à maîtriser pour minimiser les dépenses en ballast neuf. Par ailleurs, une recirculation trop importante peut entraîner une dégradation de la qualité des boues extraites, c'est-à-dire conduire à l'obtention de boues extraites trop diluées correspondant à des « pertes en eau ».

Pour minimiser ces fuites, la séparation du ballast des boues pour recycler ce ballast dans le procédé est généralement effectuée par hydrocyclonage du mélange boues/ballast.

Toutefois, les risques de dysfonctionnement d'un hydrocyclone augmentent rapidement au-delà d'une concentration donnée de solide dans la sousverse (souvent autour de 40 % de solide en volume).

Enfin, des pertes en ballast importantes peuvent avoir lieu lorsque la sousverse de l'hydrocyclone est bouchée, le ballast partant alors en surverse.

Afin de tenter de résoudre ces problèmes, il a été proposé dans l'état de la technique, à savoir dans la demande de brevet WO-A-03053862 publiée le 3 juillet 2003, d'extraire par pompage le mélange de boues et de ballast en partie basse du décanteur et de l'acheminer vers une zone agitée de mélange intermédiaire, d'extraire le mélange de boues et de ballast présent dans ladite zone de mélange intermédiaire et lui faire subir une étape de séparation boues/ballast par hydrocyclonage et de recirculer une partie des boues en ajustant le débit de cette recirculation.

Toutefois, la mise en oeuvre de cette technique conduit rapidement à une dégradation de la qualité de l'eau traitée si l'on souhaite mettre en oeuvre l'étape de séparation du ballast et des boues dans des conditions menant à recycler dans la zone de floculation un ballast le plus propre possible. En effet l'afflux de solides supplémentaires tend à polluer la qualité de l'eau traitée.

En tout état de cause, tant ce procédé décrit dans WO-A-03053862 que ceux décrits dans FR-A-2627704, FR-A-2719234 ne permettent pas d'optimiser les quantités de ballast devant être mises en oeuvre en fonction de la charge en matières à floculer de l'eau à traiter, optimisation qui permettrait à la fois :

d'obtenir la floculation des impuretés à éliminer,
de minimiser les pertes en ballast,
de diminuer les pertes en eau,
d'obtenir une eau traitée de bonne qualité,

et ce sans augmenter considérablement l'énergie nécessaire à la formation des flocs et à la recirculation des boues.

L'objectif de la présente invention est de proposer une technique permettant de converger vers ou d'obtenir une telle optimisation.

Cet objectif est atteint grâce à l'invention qui concerne un procédé de traitement d'une eau chargée d'impuretés, colloïdales, dissoutes ou en suspension dans une installation de traitement comprenant les étapes consistant à :

- mettre en contact dans une zone de floculation ladite eau, au moins un ballast constitué d'au moins un matériau granulaire insoluble plus lourd que l'eau, et au moins un réactif floculant pour permettre la formation de flocs ;
- introduire le mélange d'eau et de flocs ainsi formés dans une zone de décantation ;
- séparer l'eau traitée en partie haute de ladite zone de décantation d'un mélange de boue et de ballast résultant de la décantation desdits flocs ;
- extraire le mélange de boues et de ballast en partie basse de ladite zone de décantation et l'acheminer vers une zone agitée de mélange intermédiaire;
- extraire le mélange de boues et de ballast présent dans ladite zone de mélange intermédiaire et lui faire subir une étape de séparation boue/ballast par hydrocyclonage,
- recycler la sousverse de l'étape d'hydrocyclonage dans ladite zone de floculation ;
- extraire une partie des boues provenant de la surverse de l'étape d'hydrocyclonage et recirculer l'autre partie de ces boues dans ladite zone agitée de mélange intermédiaire ;

caractérisé en ce qu'il comprend :

- une étape consistant à mesurer en continu au moins un paramètre représentatif de la concentration de l'eau en impuretés avant ou lors de son entrée dans ladite zone de floculation ;
- une étape consistant à utiliser les résultats de ladite mesure ainsi effectuée pour en déduire en continu la quantité de ballast devant être mise en oeuvre pour l'obtention d'une eau traitée présentant une qualité prédéterminée.

Un tel procédé permet de connaître à chaque instant la quantité de ballast nécessaire pour obtenir, en fonction de la charge polluante de l'eau à traiter, la floculation de toute cette charge polluante tout en minimisant les pertes en ballast.

Le procédé selon l'invention comprend :

- une étape consistant à mesurer en continu la concentration en ballast du mélange extrait de ladite zone de décantation ou du mélange présent dans ladite zone de floculation ;
- une étape consistant à déduire de la mesure en continu de la concentration du mélange extrait de ladite zone de décantation, la concentration de ballast effectivement présente dans ladite installation ;
- une étape consistant à recharger la zone de floculation en ballast lorsque ladite concentration de ballast effectivement présente dans ladite installation est inférieure à un seuil prédéterminé.

Selon une variante intéressante, ladite étape consistant à effectuer des recharges de la zone de floculation en ballast lorsque la quantité de ballast effectivement présente dans ladite installation est inférieure à un seuil prédéterminé est effectuée automatiquement.

Avantageusement, le procédé comprend de plus une étape consistant à utiliser les résultats de ladite mesure dudit au moins un paramètre représentatif de la concentration de l'eau en impuretés pour en déduire aussi la dose dudit réactif floculant devant être distribuée dans la zone de floculation pour l'obtention d'une eau traitée présentant ladite qualité prédéterminée.

Selon une variante, le procédé comprend aussi une étape préalable consistant à injecter en continu dans ladite eau, avant son entrée dans la zone de floculation, au moins un réactif coagulant selon une dose prédéterminée et, le cas échéant, au moins un réactif destiné à rectifier son pH selon une dose prédéterminée. Cette étape d'injection de réactif coagulant et de rectification de pH est très généralement nécessaire. Toutefois, il existe de rares cas de figure où elle ne sera pas absolument indispensable, notamment lorsque les eaux à traiter seront très peu chargées en matières organiques.

Préférentiellement, ledit paramètre représentatif de la concentration de l'eau en impuretés utilisé pour la mise en oeuvre du procédé proposé est la concentration (X) de ladite eau dite en « MES globale », ladite concentration dite en « MES globale » étant calculée en prenant en compte tout ou partie des paramètres suivants :

- la concentration de ladite eau en matières en suspension,
- la concentration de ladite eau en matières organiques,
- la concentration en microorganismes de l'eau brute,
- la concentration en micropolluants de l'eau brute,
- ladite dose prédéterminée de réactif coagulant,
- ladite.dose prédéterminée de réactif destiné à rectifier le pH.

Selon une variante du procédé divulgué, la quantité de ballast devant être mise en suspension dans le bassin de floculation pour l'obtention d'une eau traitée présentant ladite qualité prédéterminée est déterminée à partir de la concentration Y en ballast nécessaire pour ladite concentration X dite en « MES globale » calculée selon la formule I:$Y=aX^b+c$ (dans laquelle a est compris entre 0,4 et 1, b est compris entre 0,3 et 1 et c est compris entre 0 et 2) et à partir du volume approximatif d'eau présent dans ladite installation.

Préférentiellement, le procédé proposé comprend une étape consistant aussi à ajuster en continu la dose dudit réactif floculant distribuée dans ladite zone de floculation en fonction de ladite concentration de ballast devant être mise en oeuvre pour l'obtention d'une eau traitée présentant une qualité prédéterminée.

Préférentiellement, ladite étape consistant à extraire le mélange de boues et de ballast en partie basse de ladite zone de décantation et à l'acheminer vers une zone de mélange intermédiaire est effectuée à l'aide d'au moins une vis sans fin. Une telle vis sans fin permet d'acheminer de façon bien plus régulière le mélange de boues et de ballast provenant de la partie basse du décanteur vers la zone intermédiaire que ne l'autoriserait l'utilisation d'une simple canalisation pourvue d'une pompe.

Selon une variante intéressante, le procédé comprend aussi une étape consistant à ajuster le débit des boues provenant de la surverse de l'étape d'hydrocyclonage recirculées vers ladite zone de mélange intermédiaire de manière à maintenir un niveau de boues et de ballast prédéterminé dans ladite zone de mélange intermédiaire.

Dans un tel cas, le procédé comprend préférentiellement une étape consistant à stocker les boues provenant de la surverse de l'étape d'hydrocyclonage dans une bâche présentant un trop plein, à mesurer le niveau de mélange de boues et de ballast présent dans la zone de mélange intermédiaire, et à libérer au moins une partie de ladite bâche dans ladite zone de mélange intermédiaire lorsque la valeur mesurée est inférieure à un seuil prédéterminé.

Selon un autre aspect préférentiel de la technique divulguée, ladite étape d'hydrocyclonage du mélange de boues et de ballast provenant de ladite zone de décantation est effectuée en mettant en oeuvre une injection de liquide auxiliaire tangentiellement auxdites boues.

Avantageusement, ledit liquide auxiliaire est injecté à raison d'un volume correspondant à 5 à 100 %, typiquement 5 à 20 %, du volume de mélange de boues et de ballast introduit dans l'étape d'hydrocyclonage.

L'utilisation d'un tel liquide auxiliaire permet d'obtenir en sousverse d'hydrocyclone un ballast plus propre, essentiellement débarrassé de la gangue d'impuretés qui l'entoure lorsqu'il arrive dans l'hydrocyclone.

Selon une variante du procédé décrit, ladite étape consistant à mettre en contact dans une zone de floculation ladite eau, au moins un ballast constitué d'au moins un matériau granulaire insoluble plus lourd que l'eau, et au moins un réactif floculant pour permettre la formation de flocs, comprend :

- une étape consistant à délimiter au sein de la zone de floculation, au moyen d'une structure guide-flux complètement immergée, une zone interne dans laquelle on provoque, par agitation, un écoulement axial turbulent du mélange de l'eau à traiter, du ballast et du floculant dans une direction axiale de cette structure guide-flux,
- une étape consistant à injecter ledit réactif floculant au moyen d'un dispositif de répartition hydraulique au sein dudit écoulement axial,
- une étape consistant à répartir cet écoulement, au moyen d'un dispositif statique s'opposant à la rotation de cet écoulement et disposé à la sortie de cette structure guide-flux ;
- une étape consistant à laisser circuler ce mélange dans une zone périphérique entourant cette structure guide-flux, dans un sens opposé jusqu'à l'entrée de ladite zone interne ; et,
- une étape consistant à faire passer ce mélange vers ladite zone de décantation.

L'utilisation de moyens d'agitation prévus dans la zone interne délimitée par la structure guide-flux permet un mélange intense du ballast avec le floculant et la matière en suspension concourant à une bonne formation des flocs dans la zone périphérique. La partition de la zone de floculation en une zone interne et une zone périphérique permet d'éviter la destruction mécanique de ces flocs par les moyens d'agitation dont les flocs sont protégés par la structure guide-flux.

Préférentiellement, le procédé comprend une étape consistant à convertir l'écoulement sortant de ladite structure guide-flux en écoulement axial grâce à un dispositif statique répartiteur de flux. Ce dispositif pourra être prévu séparé de la structure guide-flux, par exemple fixé au fond de la zone de floculation. Toutefois, préférentiellement, le dispositif statique répartiteur de flux sera prévu au sein même de la structure guide-flux.

Le procédé divulgué permet de prévoir un temps de contact entre l'eau à traiter, le réactif floculant et le ballast dans ladite zone de floculation d'une à quelques minutes.

Préférentiellement, ledit ballast est du microsable d'un diamètre moyen compris entre environ 20 et 400 micromètres.

Selon un variante du procédé, un matériau granulaire présentant des propriétés d'adsorption, tel que du charbon actif en poudre, ou un matériau granulaire présentant des propriétés d'échanges d'ions ou de molécules, tel qu'un résine est introduit dans la zone de floculation ou en amont de la zone de floculation de façon à permettre un temps de contact suffisant de ce matériau avec l'eau à traiter.

Ce matériau pourra le cas échéant constituer ledit ballast ou un second ballast.

Préférentiellement, l'étape de décantation du procédé est une étape de décantation lamellaire.

L'invention concerne également toute installation pour la mise en oeuvre d'un tel procédé comprenant :

- au moins une cuve de floculation pourvue d'au moins un agitateur ;
- une canalisation d'amenée d'eau à traiter dans ladite cuve de floculation ;
- un décanteur pourvu d'une évacuation de l'eau traitée en partie basse;
- une canalisation reliant la partie basse du décanteur à une cuve intermédiaire pourvue d'au moins un agitateur ;
- une canalisation reliant ladite cuve intermédiaire à un hydrocyclone ;
- une canalisation pour la recirculation d'une partie des surverses de l'hydrocyclone vers ladite cuve intermédiaire ;

caractérisée en ce qu'elle comprend :

au moins un premier capteur destiné à mesurer en continu au moins un paramètre représentatif de la concentration en impuretés de l'eau entrant dans ladite installation ;
un calculateur permettant de déduire en continu des mesures effectuées par ledit premier capteur la quantité de ballast devant être mise en oeuvre pour l'obtention d'une eau traitée présentant une qualité prédéterminée.

L'installation comprend au moins un deuxième capteur prévu dans ladite cuve de floculation ou dans ladite cuve intermédiaire ou au niveau de ladite canalisation reliant ladite cuve intermédiaire audit hydrocyclone permettant de mesurer en continu la concentration en ballast du mélange transitant dans l'une de celles-ci, et en ce que ledit calculateur permet de déduire en continu des mesures effectuées par ledit second capteur, la quantité de ballast effectivement présente dans ladite installation.

Avantageusement, un telle installation comprend un dispositif automatique de recharge en ballast.

Préférentiellement, ledit calculateur est conçu pour déduire en continu des mesures effectuées par ledit premier capteur la dose de réactif floculant devant être mise en oeuvre pour l'obtention d'une eau traitée présentant ladite qualité prédéterminée.

Selon une variante, l'installation comprend aussi un distributeur automatique de réactif floculant relié audit calculateur.

Avantageusement, ledit premier capteur est un capteur mesurant la concentration de l'eau brute en matières en suspension et/ou la concentration de l'eau brute en matières organiques telle que la concentration de ladite eau en Carbone Organique Total.

Selon une variante, l'installation inclut au moins un capteur destiné à mesurer en continu la qualité de l'eau traitée par ladite installation. Dans d'autres variantes, cette mesure pourra être effectuée seulement de temps en temps, le cas échéant manuellement.

Préférentiellement, ladite canalisation d'amenée d'eau dans la cuve de floculation est équipée d'un mélangeur statique de l'eau à traiter avec un réactif coagulant.

Avantageusement, ladite évacuation de l'eau traitée dudit décanteur comprend au moins un déversoir ou un tube perforé.

Préférentiellement, ledit décanteur est pourvu en son entrée d'une cloison siphoïde.

Egalement préférentiellement, ledit décanteur est pourvue en son entrée d'une structure redresseuse de flux. Avantageusement, celle-ci comprend au moins deux plaques parallèles entre elles disposées de part et d'autre d'un déversoir noyé prévu entre la cuve de floculation et le décanteur et d'autre part de plaques disposées, parallèles entre elles, entre les plaques, à cheval sur ledit déversoir noyé, ces plaques transversales constituant avec les plaques autant de canaux d'écoulement entre la cuve de floculation et le décanteur.

Selon une variante intéressante, ladite canalisation reliant la partie basse du décanteur à ladite cuve intermédiaire est pourvue d'une vis sans fin.

Selon une autre variante, l'installation comprend une bâche pourvue d'un trop plein prévue sur ladite canalisation pour la recirculation d'une partie des surverses de l'hydrocyclone vers ladite cuve intermédiaire, et préférentiellement une vanne prévue sur ladite canalisation pour la recirculation d'une partie des surverses de l'hydrocyclone vers ladite cuve intermédiaire, ladite vanne étant prévue en aval de ladite bâche.

Egalement préférentiellement, l'installation comprend un capteur du niveau du mélange de boue et de ballast présent dans ladite cuve intermédiaire.

Selon une variante, l'hydrocyclone utilisé dans l'installation divulguée présente une partie cylindrique pourvue d'au moins une alimentation tangentielle du mélange de boue et de ballast à traiter et une partie conique, et, à la sortie de la partie conique, d'une chambre d'injection de liquide auxiliaire présentant une alimentation tangentielle de liquide auxiliaire.

Selon une variante, l'installation proposée comprend au moins un distributeur d'un matériau présentant des propriétés d'adsorption ou d'échanges d'ions ou de molécules dans ladite cuve de floculation.

Préférentiellement, ledit décanteur est un décanteur lamellaire, pourvu selon une variante de lamelles verticales.

Selon un aspect intéressant, ladite cuve de floculation comporte préférentiellement une structure guide-flux, ouverte à ses deux extrémités et disposée à distance du fond de ladite cuve délimitant une zone médiane pourvue dudit agitateur et une zone périphérique et un dispositif statique répartiteur du flux sortant de ladite structure guide-flux. Préférentiellement, cette structure guide-flux est un tube de section circulaire disposé verticalement à distance du fond de ladite cuve de floculation.

Selon un variante intéressante, un tel dispositif statique est intégré à la partie inférieure de la structure guide-flux, préférentiellement au moins 200 mm au-dessous de l'agitateur. Avantageusement, ce dispositif est constitué d'au moins une plaque diamétrale de hauteur H définissant au moins deux compartiments. Préférentiellement, lesdits compartiments formés par ladite au moins une plaque présentent des surfaces sensiblement égales et la largeur théorique B de chaque compartiment est choisie pour conduire à un rapport H/B entre la hauteur H de ladite au moins une plaque et ladite largeur théorique B compris entre environ 1 et environ 2, typiquement égal à environ 1,5.

L'invention, ainsi que les différents avantages qu'elle présente, seront plus facilement compris grâce à la description détaillée qui va suivre de deux modes de réalisation préférentiels de celles-ci donnée en référence aux figures dans lesquels :

- la figure 1 représente une vue schématique en coupe d'un premier mode de réalisation d'une installation selon la présente invention ;
- la figure 2 représente une vue en perspective supérieure du dispositif répartiteur de flux prévu en sortir du tube guide-flux de l'installation représentée à la figure 1 ;
- la figure 3 représente une vue partielle en perspective inférieure de la structure redresseuse de flux prévue sur le déversoir entre la cuve de floculation et le décanteur de l'installation représentée à la figure 1 ;
- la figure 4 représente une vue en coupe de l'hydrocyclone de cette installation ;
- la figure 5 représente une vue schématique en coupe d'un second mode de réalisation d'une installation selon la présente invention ;
- la figure 6 représente une vue en coupe du tube guide-flux et de son répartiteur de flux intégré de l'installation représentée à la figure 5 ;
- la figure 7 représente une vue en coupe AA' de ce répartiteur de flux ;
- les figures 8 et 9 représente des vues en coupe d'autres modes de réalisation d'un répartiteur de flux.

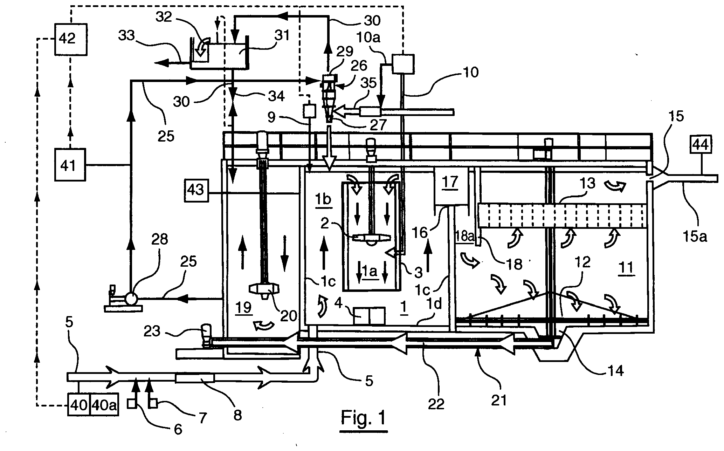

En référence à la figure 1, l'exemple de mode de réalisation ici décrit présente une cuve de floculation 1 pourvue d'un agitateur mécanique 2. Cet agitateur mécanique 2 comprend un axe vertical monté rotatif plongeant dans la cuve et pourvu à ses extrémités de pales.

La cuve de floculation 1 présente dans ce mode de réalisation préférentiel une forme essentiellement parallélépipédique mais pourra présenter d'autres formes, notamment circulaire, dans d'autres modes de réalisation.

Cette cuve de floculation 1 est pourvue dans sa partie centrale d'une structure guide-flux constituée par un tube guide-flux 3 de forme cylindrique accueillant l'agitateur 2. Ce tube guide-flux 3 est prévu à distance du fond de la cuve et délimite au sein de celle-ci une zone interne 1a centrale, constitué par la lumière du tube guide-flux 3, et une zone périphérique 1b, entre la paroi externe de ce tube guide-flux 3 et les parois latérales 1c de la cuve de floculation 1.

Cette cuve de floculation 1 est également pourvue, à la sortie du tube guide-flux 3 et à distance de celui-ci, d'un dispositif statique 4 répartiteur de flux fixé à sa paroi de fond 1d.

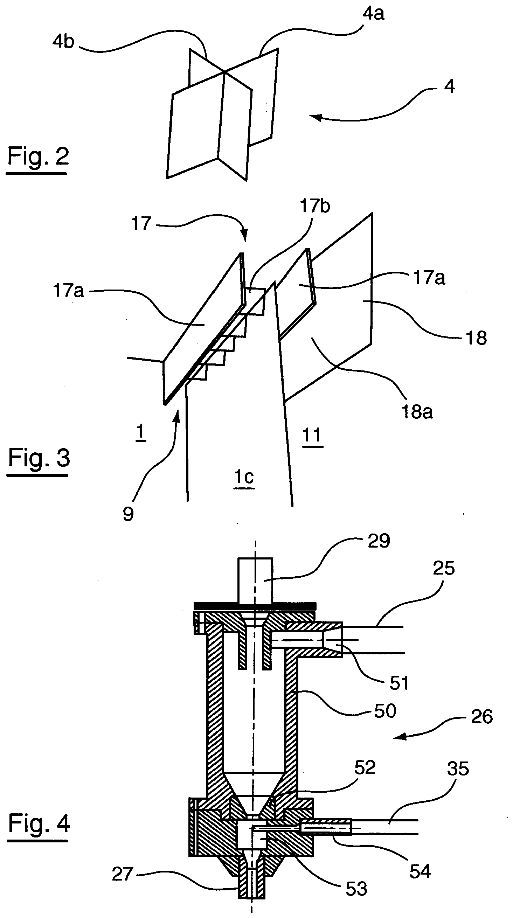

Ce dispositif statique 4 est représenté en perspective sur la figure 2. Comme on peut le voir sur celle-ci, il est constitué de l'association de deux plaques 4a et 4b formant entre elles un croisillon.

On notera que dans d'autres modes de réalisation, ce dispositif statique pourra être prévu à la sortie du tube guide-flux mais intégré dans celui-ci au lieu d'être prévu à distance de celui-ci et fixé au fond.

L'installation décrite à la figure 1 comprend par ailleurs une canalisation 5 d'amenée d'une eau à traiter dans la cuve de floculation décrite ci-dessus, cette canalisation 5 abouchant dans la partie inférieure de celle-ci.

Cette canalisation 5 est équipée de moyens 6 d'injection, tel qu'un injecteur, d'un réactif coagulant, par exemple du chlorure ferrique, et de moyens 7 d'injection, tel qu'un injecteur, d'un réactif permettant d'ajuster le pH, par exemple de la chaux, ainsi que d'un mélangeur statique 8 permettant de mélanger les réactifs apportés dans la canalisation par les moyens 6 et les moyens 7 avec une eau brute de façon à obtenir, en entrée de la cuve de floculation, une eau coagulée ayant un pH prédéterminé.

L'installation décrite à la figure 1 comprend aussi des moyens de distribution 9, tel qu'un distributeur, d'un matériau granulaire constituant un ballast, tel que du micro-sable, dans la cuve de floculation 1, ainsi que des moyens de distribution 10, tel qu'un distributeur, d'un réactif floculant, tel que par exemple un polymère, dans cette même cuve de floculation.

Plus précisément, les moyens 10 permettent la distribution du réactif floculant à l'intérieur du tube guide-flux 3 dans une partie de celui-ci situé au-dessous des pales de l'agitateur 2.

L'installation comprend par ailleurs un décanteur 11 lamellaire, prévue en aval de la cuve de floculation. Dans le cadre de ce mode de réalisation préférentiel, pour augmenter la compacité de l'installation, ce décanteur présente une paroi 1c commune avec la cuve de floculation, cette paroi commune étant doté d'un déversoir 16 équipé d'une structure redresseuse de flux 17. Le décanteur 11 est muni d'une cloison siphoïde 18 formant avec ce déversoir 16 et ces redresseurs de flux un passage 18a entre la cuve de floculation 1 et le décanteur 11.

Ce passage 18a est décrit plus en détail en référence à la figure 3 .

Comme on peut le voir sur cette figure 3, la paroi 1c commune à la cuve de floculation 1 et au décanteur 11 est pourvue dans sa partie supérieure d'un déversoir 9 noyé. Ce déversoir noyé 9 est équipé d'une structure redresseuse de flux 17. Plus précisément, cette structure est constituée, d'une part de deux plaques 17a parallèles entre elles disposées de part et d'autre du déversoir noyé 16 et d'autre part de plaques 17 b disposées, parallèles entre elles, entre les plaques 17a, à cheval sur le déversoir noyé 16. Ces plaques transversales 17b constituent avec les plaques 17a autant de canaux d'écoulement entre la cuve de floculation 1 et le décanteur 11. Ces canaux communiquent avec le passage 18a, par ailleurs délimité par la cloison siphoïde prévue dans le décanteur 11.

En référence à la figure 1, le décanteur 11 de l'installation est pourvue dans sa partie inférieure d'un dispositif 12 rotatif de raclage des boues et, dans sa partie supérieure de lamelles 13 horizontales.

L'art antérieur proposait en effet d'incliner les lamelles des décanteurs lamellaires utilisés dans le cadre des installations de traitement d'eau à flocs lestés afin de favoriser la décantation des flocs. Or, les inventeurs ont découvert que la caractéristique consistant à prévoir verticales les lamelles du décanteur ne nuisait pas à la décantation des flocs et présentait l'avantage de faciliter la manutention relative à ces plaques. On notera toutefois, que dans d'autres modes de réalisation, le décanteur pourra présenter des lamelles inclinées ou être dépourvu de lamelles.

Le décanteur 11 présente dans sa partie basse une goulotte 14 d'évacuation des boues décantées dans celui-ci, et dans sa partie supérieure une évacuation 15 de l'eau traitée constituée selon ce mode de réalisation par un simple déversoir. L'eau traitée provenant de ce déversoir est reprise par une canalisation 15a sur laquelle est prévue un capteur 44 permettant d'effectuer des mesures en continu ou ponctuellement d'un ou plusieurs paramètres relatifs à la qualité de l'eau traitée. On notera à ce sujet que dans d'autres modes de réalisation de l'invention, de telles mesures relatives à la qualité de l'eau traitée pourront être effectuées manuellement.

Toujours en référence à la figure 1, l'installation selon la présente invention comprend également une cuve 19 dite « cuve intermédiaire », pourvue d'un agitateur 20 constitué d'un axe rotatif sur lequel sont montées des pales.

Dans ce mode de réalisation, pour des raisons de compacité, cette cuve intermédiaire 19 est prévue acollée à la cuve de floculation 1. Le fond de cette cuve intermédiaire 19 est toutefois prévu à un niveau inférieur à celui de la cuve de floculation 1.

L'installation décrite à la figure 1 comprend également une canalisation 21 reliant la goulotte 14 du décanteur 11 à l'intérieur de la cuve intermédiaire 19. Cette canalisation 21 est équipée d'une vis sans fin 22 dont la rotation est commandée par un moteur 23.

L'installation comprend aussi une canalisation 25 pourvue d'une pompe 28 reliant la cuve intermédiaire 19 à un hydrocyclone 26 dont la sousverse 27 est prévue au-dessus de la cuve de floculation 1.

La surverse 29 de l'hydrocyclone 26 est reliée à une canalisation de recirculation 30 abouchant au-dessus la cuve intermédiaire 19. Une bâche 31 est prévue sur cette canalisation de recirculation 30 et munie d'un trop-plein 32 ainsi que d'une canalisation évacuation 33 de ce trop-plein. La partie de la canalisation 30 prévue en aval de cette bâche 31 est pourvue d'une vanne 34.

La cuve intermédiaire 19 est par ailleurs équipée d'un capteur 43 du niveau de mélange de boues et de ballast présent dans la cuve 19. Ce capteur 43 est relié à la vanne 34.

Selon ce mode de réalisation préférentielle, l'installation comprend aussi une canalisation d'amenée d'eau de service 35 vers la sousverse 27 de l'hydrocyclone 26. Cette canalisation est munie de moyens d'amenée 10a de réactif floculant, permettant d'optimiser le mélange de celui-ci avec le ballast. L'hydrocyclone est représenté plus en détail en coupe à la figure 4.

En référence à la figure 4, l'hydrocyclone 26 comprend une partie cylindrique 50 pourvue dans sa partie supérieure d'une alimentation tangentielle de suspension à traiter. Cette alimentation tangentielle est connectée à la canalisation de recirculation 25.

L'hydrocyclone 26 comprend par ailleurs une partie conique 52 en continuité de la partie cylindrique 50 et qui communique avec une chambre cylindrique 53. La chambre cylindrique 53 présente une alimentation tangentielle 54 qui communique avec la canalisation 35 d'amenée d'eau de service citée ci-dessus. La chambre cylindrique 53 communique avec la sousverse 27 de l'hydrocyclone. La surverse 29 de l'hydrocyclone est prévue dans la partie supérieure de la partie cylindrique 50.

En référence à la figure 1, l'installation décrite comprend des capteurs 40,40a destinés à mesurer en continu des paramètres représentatifs de la concentration de l'eau brute à traiter en impuretés entrant dans la cuve de floculation 1. Ces impuretés peuvent être de différentes natures et/ou se présenter sous différentes formes (matières en suspension, matières colloïdales, matières dissoutes, micro-organismes, micro-polluants...). Les paramètres mesurés peuvent par exemple être la concentration en matières en suspension de l'eau brute ou la concentration de cette eau brute en matières organiques mesurée sous forme de COT (carbone oragnique total) ou bien d'adsorbance UV à 254nm ou bien de DCO (Demande chimique en Oxygène) ou bien d'oxydabilité permanganate ($KMnO_4$) ou de tout autre mode de mesure permettant d'estimer au plus juste les MO (particulaires ou dissoutes).

Comme il sera explicité ci-après plus en détails, les mesures de ces paramètre effectuées par ces capteurs 40, 40 seront utilisées pour en déduire la concentration dite en « MES globales » de l'eau entrant dans la cuve de floculation 1.

On notera que dans le mode de réalisation décrit à la figure 1, ce capteur 40 est prévu en amont du mélangeur statique 8 prévu sur la canalisation d'amenée 5 de l'eau à traiter dans la cuve de floculation 1. Les mesures effectuées par le capteur 40 sont donc faites sur de l'eau brute. Toutefois, il pourra aussi être envisagé, dans d'autres modes de réalisation d'effectuer les mesures sur l'eau coagulée et donc de placer un capteur correspondant en aval des moyens de coagulation de l'eau.

L'installation décrite comprend également un capteur 41 prévu au niveau de la canalisation 25 reliant la cuve intermédiaire 19 à l'hydrocyclone 26. Ce capteur 41 permet de mesurer en continu la concentration en ballast (dans le cadre de cet exemple de mode de réalisation, du microsable) du mélange de ballast et de boues transitant dans cette canalisation 25. Une telle concentration en ballast correspond à la concentration en ballast présent dans la cuve intermédiaire 19 et est proportionnelle à la concentration en ballast du mélange d'eau, de ballast et de polymère présent dans la cuve de floculation 1.

On notera d'ailleurs que dans d'autres modes de réalisation, ce capteur de concentration en ballast pourra être prévu soit dans la cuve intermédiaire 19, soit dans la cuve de floculation 1.

L'installation comprend aussi un calculateur 42 permettant de recueillir les mesures effectuées par les capteurs 40, 40a et 41.

Le fonctionnement de l'installation décrite ci-dessus en référence aux figures 1 à 4 est le suivant.

De l'eau brute à traiter arrive par la canalisation 5. Du réactif coagulant (par exemple du chlorure ferrique) et du réactif destiné à rectifier le pH (par exemple de la chaux) sont injectés à des doses prédéterminées dans cette eau brute respectivement grâce aux moyens 6 et 7 et mélangés à celle-ci grâce au mélangeur statique 8 de façon telle que l'eau arrivant dans la cuve de floculation 1 soit coagulée et présente un pH optimisé en fonction du type coagulant choisi.

L'eau coagulée arrivant dans la partie inférieure de la cuve de floculation 1 connaît un parcours ascendant dans la zone périphérique 1b de celle-ci délimitée par les parois latérales 1b de la cuve de floculation 1 et la paroi externe du tube guide-flux 3 (comme indiqué sur la figure 1 par les flèches dirigées vers le haut dans la cuve de floculation 1), avant de pénétrer dans ce tube guide-flux 3 par son ouverture supérieure et de connaître un mouvement descendant dans la zone interne centrale la délimitée par la lumière de ce tube guide-flux 3 (comme indiqué sur la figure 1 par les flèches dirigées vers le bas dans le tube guide-flux 3d).

On notera que dans d'autres modes de réalisation, l'eau coagulée pourra arriver dans la partie supérieure de la cuve de floculation, l'écoulement de celle-ci connaissant alors un mouvement descendant dans la zone périphérique et une mouvement ascendant dans la zone interne.

Lors de sa descente dans le tube guide-flux 3, l'eau coagulée connaît un mouvement descendant possédant une composante radiale horizontale du fait du mouvement des pales de l'agitateur 2.

En sortant du tube guide-flux 3 par la sortie inférieure de celui-ci, le flux rencontre le dispositif statique 4 répartiteur de flux. Ce dispositif statique 4 répartiteur de flux, de par sa configuration, permet d'atténuer fortement la composante radiale du flux provenant du tube guide-flux 3 et de répartir ce flux de façon sensiblement égale dans l'intégralité de la zone périphérique 1b de la cuve de floculation 1.

Grâce aux moyens de distribution 9, une quantité de ballast, calculée comme indiqué ci-dessous, est distribuée dans l'eau présente dans cuve de floculation 1.

Grâce aux moyens de distribution 10 une dose de réactif floculant, calculée comme indiqué ci-dessous, est distribué en continu à l'intérieur du tube guide-flux 3 dans cette même eau.

Grâce au tube guide-flux 3 et à l'agitateur 2, le mélange de ce polymère et du micro sable avec l'eau est optimisé.

Il se forme au sein de la cuve de floculation 1 des flocs constitués de ballast autour duquel se sont agglutinés, grâce au réactif floculant, les impuretés contenues dans l'eau. L'amélioration du mélange de l'eau avec le ballast et le réactif floculant permet d'optimiser également la formation des flocs.

Grâce aux capteurs 40 et 40a respectivement, la teneur en matières en suspension et la concentration en matières organiques (MO) de l'eau brute sont mesurées en continu.

Les mesures correspondantes sont envoyées au calculateur 42 qui associe à ces mesures des données concernant les doses prédéterminées de réactif coagulant et de réactif destiné à rectifier le pH utilisées et la concentration en micro-algues de l'eau brute pour en déduire une concentration de l'eau coagulée entrant dans la cuve de floculation 1 dite en « MES globales » représentative de la concentration en polluants à éliminer contenu dans cette eau.

Le calculateur 42 calcule ensuite la dose de réactif floculant devant être mise en oeuvre dans l'installation grâce aux moyens 9, en fonction :

- du débit de l'eau brute à traiter arrivant dans l'installation par la canalisation 5,
- de ladite concentration dite en « MES globales » de l'eau arrivant dans la cuve de floculation 1,
- de la granulométrie du matériau granulaire constituant le ballast.

Le calculateur 42 calcule la quantité de ballast devant être mise en oeuvre dans l'installation pour obtenir une qualité d'eau traitée prédéterminée, cette quantité correspondant à une concentration minimale en ballast dans la cuve de floculation.

Dans le cadre du présent exemple de mode de réalisation, cette concentration de ballast Y est calculée par le calculateur 42 grâce à la formule :

$$Y = 0{,}4208 \times X^{0,3667}$$

dans laquelle X correspond à la concentration en « MES globales ».

Dans d'autres modes de réalisation, il pourra être envisagé d'autres modes de calcul de cette concentration en ballast.

A près avoir transité dans la cuve de floculation 1, le mélange formé d'eau et de floc pénètre dans le décanteur 11 en passant par dessus le déversoir noyé 16.

Lors de ce passage, ce mélange transite dans les canaux délimités par les plaques 17,17a de la structure redresseuse de flux décrite en référence à la figure 3.

Cette structure permet d'obtenir à la sortie de ces canaux un écoulement de mélange d'eau et de flocs mieux réparti sur la longueur du déversoir 16.

Ce mélange transite ensuite dans le passage 18a défini par le déversoir 16 et la cloison siphoïde 18 pour arriver dans le décanteur 11.

Dans le décanteur 11, les flocs formés de matières agrégées autour du ballast décantent et viennent s'accumuler sur la paroi de fond du décanteur 11 pour former un mélange de boues et de ballast. Cette décantation est améliorée grâce à la présence des lamelles 13 prévue dans la partie supérieure du décanteur 11.

Le dispositif rotatif de raclage 12 permet de diriger ce mélange de boues et de sable dans la goulotte 14 du décanteur 11.

L'eau traitée débarrassée de ses impuretés est évacuée dans la partie supérieure du décanteur 11 par l'évacuation 15 .

Le mélange de boues et de ballast présent dans la goulotte 14 du décanteur 11 est quant à lui extrait de cette goulotte 14 par la canalisation 21 grâce à la vis sans fin 22 prévue dans la canalisation 21, vis sans fin qui est actionnée grâce au moteur 23.

Ce mélange de boues et de ballast est acheminé à vitesse essentiellement constante dans la cuve intermédiaire 19. Cet acheminement est facilité du fait que le fond de la cuve 19 est prévu à un niveau inférieur de celui de la cuve de floculation 1 ce qui permet à la canalisation 21 de passer sous celle-ci.

Le mélange de boues et de ballast est mélangé grâce aux moyens d'agitation 20 prévus dans la cuve 19, dans laquelle il connaît un mouvement ascendant puis descendant (comme l'indiquent les flèches dirigées vers le haut et vers le bas).

Cc mélange de boue et de ballast est continuellement extrait de la cuve intermédiaire 19 par la canalisation 25 grâce à la pompe 28 pour être acheminé vers l'hydrocyclone 26 destiné à séparer le ballast des boues contenu dans ce mélange.

Cette séparation est améliorée grâce à l'injection par la canalisation 35 d'eau de service dans l'hyrocyclone. Cette injection d'eau de service permet d'obtenir en sousverse 27 de cet hydrocyclone 26 un ballast essentiellement débarrassé de la matière organique. Le ballast récupéré en sousverse de l'hydrocyclone 27 est redistribué dans la cuve de floculation 1.

La surverse 29 de l'hydrocyclone 26, constituée de boues diluées est acheminée par la canalisation 30 vers la bâche 31 prévue sur celle-ci. Ces boues diluées s'accumulent dans cette bâche 31. Une partie de ces boues diluées est évacuée par une canalisation 33 reliée à un trop plein 32 prévu dans cette bâche tandis qu'une autre partie est réacheminée par le biais de la canalisation 30 vers la cuve intermédiaire 19. Cette recirculation n'est toutefois mise en oeuvre que lorsque le niveau de mélange présent dans la cuve 19 et détecté par le capteur 43 est inférieur à une valeur prédéterminée. Dans ce cas, la vanne 34 prévue sur la canalisation 30 s'ouvre pour libérer une partie du contenu de la bâche 31 dans la cuve 19 et se ferme lorsque le capteur 43 détecte que le niveau de mélange dans cette cuve 19 a atteint ladite valeur prédéterminée.

Ce mécanisme permet de maintenir dans la cuve 19 une concentration de ballast essentiellement constante.

Le capteur 41 mesure en permanence cette concentration et la transmet au calculateur 42 qui en déduit la quantité de ballast effectivement présente dans l'installation.

Si cette quantité s'avère inférieure ou trop inférieure à la quantité de ballast nécessaire pour obtenir une qualité d'eau prédéterminée (quantité calculée comme indiqué ci-dessus à partir de la concentration en ballast Y), en d'autres termes si cette quantité tombe en deçà d'une valeur prédéterminée, le calculateur 42 commande aux moyens de distribution 9 une recharge automatique de l'installation avec une quantité complémentaire de ballast pour obtenir ladite quantité nécessaire.

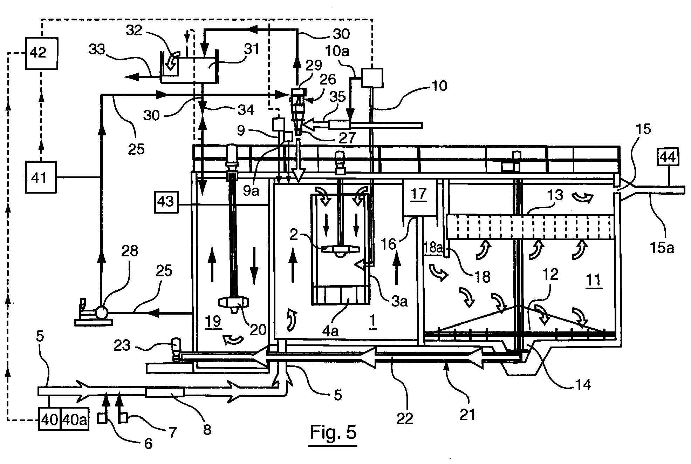

Un second exemple de mode de réalisation est représenté en références aux figure 5 à 7.

L'installation décrite sur la figure 5 est en tout point identique à celle représentée à la figure 1 sauf en ce que :

- sa cuve de floculation 1 est dotée d'un tube guide flux 3a intégrant un répartiteur de flux 4a ;
- et en ce qu'elle inclut un distributeur 9a d'un second matériau granulaire (matériau présentant des propriétés d'adsorption, ou des propriétés d'échanges d'ions ou de molécules) dans la cuve de floculation 1.

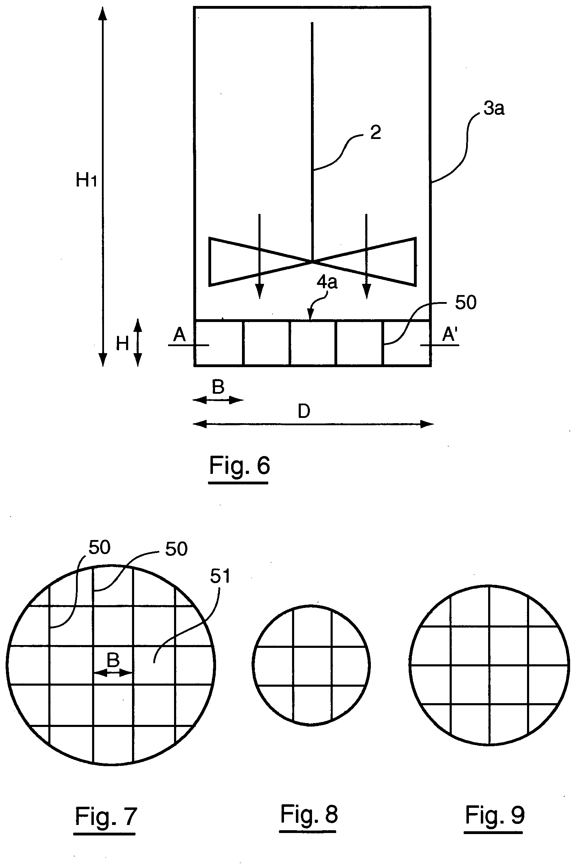

En référence à la figure 6 le répartiteur de flux intégré au tube est disposé plus de 200 mm au dessous de l'agitateur 2 et est constitué par l'association de 8 plaques 50 formant entre elles une pluralité de croisillons, délimitant 25 canaux 51 permettant le passage du fluide sortant du tube 3.

En référence aux figures 8 et 9, ce répartiteur de flux pourra être constitué d'un nombre de plaques différents de 8, par exemple 4 (figure 8) ou 9 (figure 9).

Le rapport entre la hauteur H des plaques 50 et leur largeur maximale B sera préférentiellement compris entre 1,5 et 2.

**Revendications**

1. Procédé de traitement d'une eau chargée d'impuretés, colloïdales, dissoutes ou en suspension dans une installation de traitement comprenant les étapes consistant à :

   - mettre en contact dans une zone de floculation ladite eau, au moins un ballast constitué d'au moins un matériau granulaire insoluble plus lourd que l'eau, et au moins un réactif floculant pour permettre la formation de flocs ;

- introduire le mélange d'eau et de flocs ainsi formés dans une zone de décantation ;

- séparer l'eau traitée en partie haute de ladite zone de décantation d'un mélange de boue et de ballast résultant de la décantation desdits flocs ;

- extraire le mélange de boues et de ballast en partie basse de ladite zone de décantation et l'acheminer vers une zone agitée de mélange intermédiaire;

- extraire le mélange de boues et de ballast présent dans ladite zone de mélange intermédiaire et lui faire subir une étape de séparation boue/ballast par hydrocyclonage,

- recycler la sousverse de l'étape d'hydrocyclonage dans ladite zone de floculation ;

- extraire une partie des boues provenant de la surverse de l'étape d'hydrocyclonage et recirculer l'autre partie de ces boues dans ladite zone agitée de mélange intermédiaire ;

**caractérisé en ce qu'**il comprend :

- une étape consistant à mesurer en continu au moins un paramètre représentatif de la concentration de l'eau en impuretés avant ou lors de son entrée dans ladite zone de floculation ;

- une étape consistant à utiliser les résultats de ladite mesure ainsi effectuée pour en déduire en continu la quantité de ballast devant être mise en oeuvre pour l'obtention d'une eau traitée présentant une qualité prédéterminée ;

- une étape consistant à mesurer en continu la concentration en ballast du mélange extrait de ladite zone de décantation ou du mélange présent dans ladite zone de floculation ;

- une étape consistant à déduire de la mesure en continu de la concentration en ballast du mélange extrait de ladite zone de décantation, la concentration de ballast effectivement présente dans ladite installation ;

- une étape consistant à recharger la zone de floculation en ballast lorsque ladite concentration de ballast effectivement présente dans ladite installation est inférieure à un seuil prédéterminé.

2. Procédé selon la revendication 1 **caractérisé en ce qu'**il comprend une étape consistant à utiliser les résultats de ladite mesure dudit au moins un paramètre représentatif de la concentration de l'eau en impuretés pour en déduire la dose dudit réactif floculant devant être distribuée dans la zone de floculation pour l'obtention d'une eau traitée présentant ladite qualité prédéterminée.

3. Procédé selon la revendication 1 ou 2 **caractérisé en ce que** ledit paramètre représentatif de la concentration de l'eau en impuretés est la concentration (X) de ladite eau dite en « MES globale », ladite concentration dite en « MES globale » étant calculée en prenant en compte tout ou partie des paramètres suivants :

- la concentration de ladite eau en matières en suspension,
- la concentration de ladite eau en matières organiques,
- la concentration en microorganismes de l'eau brute,
- la concentration en micropolluants de l'eau brute,
- ladite dose prédéterminée de réactif coagulant,
- ladite dose prédéterminée de réactif destiné à rectifier le pH.

4. Procédé selon la revendication 3 **caractérisé en ce que** la quantité de ballast devant être mise en suspension dans le bassin de floculation pour l'obtention d'une eau traitée présentant ladite qualité prédéterminée est déterminée à partir :

de la concentration (Y) en ballast nécessaire pour ladite concentration (X) dite en « MES globale » selon la formule (I) :

$$Y = aX^b + c$$

dans laquelle a est compris entre 0,4 et 1, b est compris entre 0,3 et 1 et c est compris entre 0 et 2.

et du volume approximatif d'eau présent dans ladite installation.

5. Procédé selon l'une quelconque des revendications 1 à 4 **caractérisé en ce qu'**il comprend une étape consistant à ajuster en continu la dose dudit réactif floculant distribuée dans ladite zone de floculation en fonction de ladite concentration de ballast devant être mise en oeuvre pour l'obtention d'une eau traitée présentant une qualité prédéterminée.

6. Procédé selon l'une quelconque des revendications 1 à 5 caractérisé en qu'il comprend une étape consistant à ajuster le débit des boues provenant de la surverse de l'étape d'hydrocyclonage recirculées vers ladite zone de mélange intermédiaire de manière à maintenir un niveau de boues et de ballast prédéterminé dans ladite zone de mélange intermédiaire.

7. Procédé selon la revendication 6 **caractérisé en ce**

**qu'**il comprend une étape consistant à stocker les boues provenant de la surverse de l'étape d'hydrocyclonage dans une bâche présentant un trop plein, à mesurer le niveau de mélange de boues et de ballast présent dans la zone de mélange intermédiaire, et à libérer au moins une partie de ladite bâche dans ladite zone de mélange intermédiaire lorsque la valeur mesurée est inférieure à un seuil prédéterminé.

8. Procédé selon l'une quelconque des revendications 1 à 7 **caractérisé en ce que** ladite étape d'hydrocyclonage du mélange de boues et de ballast provenant de ladite zone de décantation est effectuée en mettant en oeuvre une injection de liquide auxiliaire tangentiellement auxdites boues ledit liquide auxiliaire étant injecté à raison d'un volume correspondant à 5 à 100 %, typiquement 5 à 20 %, du volume de mélange de boues et de ballast introduit dans l'étape d'hydrocyclonage.

9. Procédé selon l'une quelconque des revendications 1 à 8 **caractérisé en ce que** ladite étape consistant à mettre en contact dans une zone de floculation ladite eau, au moins un ballast constitué d'au moins un matériau granulaire insoluble plus lourd que l'eau, et au moins un réactif floculant pour permettre la formation de flocs, comprend :

   - une étape consistant à délimiter au sein de la zone de floculation, au moyen d'une structure guide-flux complètement immergée, une zone interne dans laquelle on provoque, par agitation, un écoulement axial turbulent du mélange de l'eau à traiter, du ballast et du floculant dans une direction axiale de cette structure guide-flux,
   - une étape consistant à injecter ledit réactif floculant au moyen d'un dispositif de répartition hydraulique au sein dudit écoulement axial,
   - une étape consistant à répartir cet écoulement, au moyen d'un dispositif statique s'opposant à la rotation de cet écoulement et disposé à la sortie de cette structure guide-flux ;
   - une étape consistant à laisser circuler ce mélange dans une zone périphérique entourant cette structure guide-flux, dans un sens opposé jusqu'à l'entrée de ladite zone interne ; et,
   - une étape consistant à faire passer ce mélange vers ladite zone de décantation.

10. Procédé selon la revendication 9 **caractérisé en ce qu'**il comprend une étape consistant à convertir l'écoulement sortant de ladite structure guide-flux en écoulement axial grâce à un dispositif statique répartiteur de flux.

11. Procédé selon l'une quelconque des revendications 1 à 10 **caractérisé en ce que** ladite étape consistant à convertir l'écoulement sortant de ladite structure guide-flux en écoulement axial grâce à un dispositif statique répartiteur de flux est effectuée au sein même de la structure guide-flux.

12. Procédé selon l'une quelconque des revendications 1 à 11 **caractérisé en ce qu'**un matériau granulaire présentant des propriétés d'adsorption, ou des propriétés d'échanges d'ions ou de molécules est introduit dans la zone de floculation ou en amont de la zone de floculation de façon à permettre un temps de contact suffisant de ce matériau avec l'eau à traiter.

13. Procédé selon la revendication 12 **caractérisé en ce que** ledit matériau granulaire présentant des propriétés d'adsorption, ou des propriétés d'échanges d'ions ou de molécules, constitue ledit ballast.

14. Procédé selon la revendication 12 **caractérisé en ce que** ledit matériau granulaire présentant des propriétés d'adsorption, ou des propriétés d'échanges d'ions ou de molécules, constitue un second ballast.

15. Procédé selon l'une quelconque des revendications 1 à 14 **caractérisé en ce que** ladite étape de décantation est une étape de décantation lamellaire.

16. Installation pour le traitement d'une eau chargée d'impuretés, colloïdales, dissoutes, ou en suspension comprenant :

   - au moins une cuve de floculation (1) pourvue d'au moins un agitateur (2) ;
   - une canalisation (5) d'amenée d'eau à traiter dans ladite cuve de floculation (1) ;
   - un décanteur (11) pourvu d'une évacuation (15) de l'eau traitée en partie basse;
   - une canalisation (21) reliant la partie basse du décanteur à une cuve intermédiaire (19) pourvue d'au moins un agitateur (20) ;
   - une canalisation (25) reliant ladite cuve intermédiaire (19) à un hydrocyclone (26) ;
   - une canalisation (30) pour la recirculation d'une partie des surverses de l'hydrocyclone (26), vers ladite cuve intermédiaire (19) ;

   **caractérisée en ce qu'**elle comprend :

   au moins un premier capteur (40,40a) destiné à mesurer en continu au moins un paramètre représentatif de la concentration en impuretés de l'eau entrant dans ladite installation ;
   un calculateur (42) permettant de déduire en continu des mesures effectuées par ledit premier capteur la quantité de ballast devant être mise en oeuvre pour l'obtention d'une eau traitée présentant une qualité prédéterminée;
   au moins un deuxième capteur (41) prévu dans ladite cuve de floculation ou dans ladite cuve intermédiaire ou au niveau de ladite canalisation (25) reliant ladite cuve intermédiaire audit hydrocyclone permettant de mesurer en continu la concentration en ballast du mélange transitant dans l'une de celles-ci, et **en ce que** ledit calculateur (42) permet de déduire en continu des mesures effectuées par ledit second capteur (41), la quantité de ballast effectivement présente dans ladite installation.

17. Installation selon la revendication 16 **caractérisée en ce que** ledit calculateur (42) est conçu pour déduire en continu des mesures effectuées par ledit premier capteur (40,40a) la dose de réactif floculant devant être mise en oeuvre pour l'obtention d'une eau traitée présentant ladite qualité prédéterminée.

18. Installation selon l'une quelconque des revendications 16 ou 17 **caractérisée en ce que** ledit premier capteur (40,40a) est un capteur mesurant la concentration de l'eau brute en matières en suspension et/ou la concentration de l'eau brute en matières organiques telle que la concentration de ladite eau en Carbone Organique Total.

19. Installation selon l'une des revendications 16 à 18 **caractérisée en ce que** ledit décanteur (11) est pourvu en son entrée d'une cloison siphoïde (18) et d'une structure redresseuse de flux (17) .

20. Installation selon la revendication 19 **caractérisée en ce que** ladite structure redresseuse de flux (17) comprend au moins deux plaques (17a) parallèles entre elles disposées de part et d'autre d'un déversoir noyé (16) prévu entre la cuve de floculation (1) et le décanteur (11) et d'autre part de plaques (17 b) disposées, parallèles entre elles, entre les plaques (17a), à cheval sur ledit déversoir noyé (16), ces plaques transversales (17b) constituant avec les plaques (17a) autant de canaux d'écoulement entre la cuve de floculation (1) et le décanteur (11).

21. Installation selon la revendication 20 **caractérisée en ce qu'**elle comprend une vanne (34) prévue sur ladite canalisation (30) pour la recirculation d'une partie des surverses de l'hydrocyclone (26) vers ladite cuve intermédiaire (19), et un capteur (43) du niveau du mélange de boue et de ballast présent dans ladite cuve intermédiaire (19).

22. Installation selon l'une quelconque des revendications 16 à 21 **caractérisée en ce que** ledit hydrocyclone (26) présente une partie cylindrique (50) pourvue d'au moins une alimentation tangentielle du mélange de boue et de ballast à traiter et une partie conique (52), et, à la sortie de la partie conique, d'une chambre d'injection (53) de liquide auxiliaire présentant une alimentation tangentielle (54) de liquide auxiliaire.

23. Installation selon l'une quelconque des revendications 16 à 22 **caractérisée en ce qu'**elle comprend au moins un distributeur (9a) d'un matériau présentant des propriétés d'adsorption ou d'échanges d'ions ou de molécules dans ladite cuve de floculation.

24. Installation selon l'une quelconque des revendications 16 à 23 **caractérisée en ce que** ledit décanteur (11) est un décanteur lamellaire.

25. Installation selon l'une quelconque des revendications 16 à 24 **caractérisée en ce que** ladite cuve de floculation (1) comporte une structure guide-flux, ouverte à ses deux extrémités et disposée à distance du fond de ladite cuve (1) délimitant une zone médiane (1a) pourvue dudit agitateur (2) et une zone périphérique (1b) et un dispositif statique (4,4a) répartiteur du flux sortant de ladite structure guide-flux.

**Patentansprüche**

1. Verfahren zur Behandlung von Wasser, das mit kolloidalen, gelösten oder Schwebstoff-Verunreinigungen belastet ist, in einer Behandlungsanlage, das die folgenden Schritte umfasst:

 - Inkontaktbringen des Wassers in einer Ausflockungszone mit mindestens einem Ballast, der aus mindestens einem unlöslichen körnigen Material besteht, das schwerer als Wasser ist, sowie mindestens einem Flockungsmittel, um eine Flockenbildung zu ermöglichen;
 - Einführen des so gebildeten Gemischs aus Wasser und Flocken in eine Absetzzone;
 - Trennen des behandelten Wassers im oberen Abschnitt der Absetzzone von einem Gemisch aus Schlamm und Ballast, das vom Absetzen der Flocken herrührt;
 - Extrahieren des Gemischs an Schlamm und Ballast im unteren Teil der Absetzzone und Befördern zu einer gerührten Zwischenmischzone;
 - Extrahieren des in der Zwischenmischzone vorhandenen Gemischs an Schlamm und Ballast und Aussetzen dessen gegenüber einem Schritt des Trennens von Schlamm/Ballast durch Hydrozyklonierung,
 - Rückführen des Ablaufs aus dem Hydrozyklonierungsschritt in die Ausflockungszone;
 - Extrahieren eines Teils des aus dem Ablauf des Hydrozyklonierungsschritts stammenden Schlamms und Rückführen des anderen Teils des Schlamms in die gerührte Zwischenmischzone;

**dadurch gekennzeichnet, dass** es Folgendes umfasst:

- einen Schritt, der darin besteht, kontinuierlich mindestens einen Parameter zu messen, der repräsentativ ist für die Konzentration von Verunreinigungen im Wasser vor oder während dessen Eintritts in die Ausflockungszone;
- einen Schritt, der darin besteht, die Ergebnisse der so erfolgten Messung zu verwenden, um daraus kontinuierlich die Menge an Ballast abzuleiten, die umgesetzt werden muss, um behandeltes Wasser mit einer vorgegebenen Qualität zu erhalten;
- einen Schritt, der darin besteht, kontinuierlich die Ballastkonzentration des aus der Absetzzone extrahierten Gemischs oder des in der Ausflockungszone vorhandenen Gemischs zu messen;
- einen Schritt, der darin besteht, von der kontinuierlichen Messung der Ballastkonzentration des aus der Absetzzone extrahierten Gemischs die Ballastkonzentration abzuleiten, die tatsächlich in der Anlage vorhanden ist;
- einen Schritt, der darin besteht, die Ausflockungszone wieder mit Ballast zu beladen, wenn die tatsächlich in der Anlage vorhandene Ballastkonzentration niedriger ist als ein vorbestimmter Schwellenwert.

2. Verfahren nach Anspruch 1, **dadurch gekennzeichnet, dass** es einen Schritt umfasst, der darin besteht, die Ergebnisse der Messung des mindestens einen Parameters, der repräsentativ für die Konzentration von Verunreinigungen im Wasser ist, zu verwenden, um davon die Dosis des Flockungsmittels abzuleiten, das in die Ausflockungszone abgegeben werden muss, um behandeltes Wasser mit der vorbestimmten Qualität zu erhalten.

3. Verfahren nach Anspruch 1 oder 2, **dadurch gekennzeichnet, dass** der Parameter, der repräsentativ für die Konzentration von Verunreinigungen im Wasser ist, die Konzentration (X) des Wassers in "MES global" darstellt, wobei die Konzentration in "MES global" unter Berücksichtigung aller oder eines Teils der folgenden Parameter berechnet wird:

- der Schwebstoffkonzentration des Wassers,
- der Konzentration organischer Materialien im Wasser,
- der Konzentration von Mikroorganismen im Rohwasser,
- der Konzentration von Mikroschadstoffen im Rohwasser,
- der vorbestimmten Dosis des Koagulierungsmittels,
- der vorbestimmten Dosis des Mittels zum Rektifizieren des pH-Werts.

4. Verfahren nach Anspruch 3, **dadurch gekennzeichnet, dass** die Menge an Ballast, die im Flockungstank suspendiert werden muss, um ein behandeltes Wasser mit der vorbestimmten Qualität zu erhalten, bestimmt wird aus:

der Konzentration (Y) von erforderlichem Ballast für die Konzentration (X) in "MES global" nach Formel (I):

$$Y = aX^b + c$$

worin a zwischen 0,4 und 1 liegt, b zwischen 0,3 und 1 liegt und c zwischen 0 und 2 liegt, und dem ungefähren Volumen des in der Anlage vorhandenen Wassers.

5. Verfahren nach einem der Ansprüche 1 bis 4, **dadurch gekennzeichnet, dass** es einen Schritt umfasst, der darin besteht, kontinuierlich die Dosis des in die Ausflockungszone abgegebenen Flockungsmittels einzustellen in Abhängigkeit von der Ballastkonzentration, die umgesetzt werden muss, um behandelndes Wasser mit einer vorbestimmten Qualität zu erhalten.

6. Verfahren nach einem der Ansprüche 1 bis 5, **dadurch gekennzeichnet, dass** es einen Schritt umfasst, der darin besteht, den Durchsatz von Schlamm aus dem Ablauf des Hydrozyklonierungsschritts, der in die Zwischenmischzone rückgeführt wird, derart einzustellen, dass ein vorbestimmtes Maß an Schlamm und Ballast in der Zwischenmischzone aufrechterhalten wird.

7. Verfahren nach Anspruch 6, **dadurch gekennzeichnet, dass** es einen Schritt umfasst, der darin besteht, den Schlamm aus dem Ablauf des Hydrozyklonierungsschrittes in einem Reservoir zu lagern, das einen Überlauf aufweist, um den Füllstand des in der Zwischenmischzone vorhandenen Gemischs aus Schlamm und Ballast zu messen und mindestens einen Teil des Reservoirs in die Zwischenmischzone freizugeben, wenn der gemessene Wert kleiner als ein vorgegebener Schwellenwert ist.

8. Verfahren nach einem der Ansprüche 1 bis 7, **dadurch gekennzeichnet, dass** der Schritt der Hydrozyklonierung des aus der Absetzzone stammenden Gemischs aus Schlamm und Ballast durch Einsatz einer Injektion von Hilfsflüssigkeit tangential zu dem Schlamm erfolgt, wobei die Hilfsflüssigkeit in Höhe eines Volumens infiziert wird, das 5 bis 100 %, typischerweise 5 bis 20 % des Volumens des Gemischs aus Schlamm und Ballast entspricht, welches im Hydrozyklonierungsschritt eingeführt wird.

9. Verfahren nach einem der Ansprüche 1 bis 8, **dadurch gekennzeichnet, dass** der Schritt, der darin besteht, in einem Ausflockungsbereich das Wasser mit mindestens einem Ballast, der aus mindestens einem unlöslichen körnigen Material besteht, das schwerer als Wasser ist, und mindestens einem Flockungsmittel, um die Flockenbildung zu ermöglichen, in Kontakt zu bringen, Folgendes umfasst:

   - einen Schritt, der darin besteht, innerhalb des Ausflockungsbereichs mit Hilfe einer vollständig eingetauchten Strömungsführungsstruktur, eine Zone abzugrenzen, in der durch Rühren eine turbulente axiale Strömung des Gemischs aus zu behandelndem Wasser, Ballast und Flockungsmittel in einer axialen Richtung dieser Strömungsführungsstruktur erzeugt wird,
   - einen Schritt, der darin besteht, das Flockungsmittel mittels einer hydraulischen Verteilungsvorrichtung in die Axialströmung zu injizieren,
   - einen Schritt, der darin besteht, die Strömung durch eine statische Vorrichtung zu verteilen, die eine Drehung der Strömung verhindert und am Ausgang der Strömungsführungsstruktur angeordnet ist;
   - einen Schritt, der darin besteht, die Mischung in einer Randzone zirkulieren zu lassen, welche die Strömungsführungsstruktur umgibt, in gegen- läufiger Richtung bis zum Eingang der inneren Zone, und
   - einen Schritt, der darin besteht, das Gemisch in die Absetzzone zu leiten.

10. Verfahren nach Anspruch 9, **dadurch gekennzeichnet, dass** es einen Schritt umfasst, der darin besteht, die die Strömungsführungsstruktur verlassende Strömung durch eine statische Strömungsverteilungsvorrichtung in eine Axialströmung umzuwandeln.

11. Verfahren nach einem der Ansprüche 1 bis 10, **dadurch gekennzeichnet, dass** der Schritt, der darin besteht, die die Strömungsführungsstruktur verlassende Strömung durch eine statische Strömungsverteilervorrichtung in eine Axialströmung umzuwandeln, innerhalb der Strömungsführungsstruktur selbst erfolgt.

12. Verfahren nach einem der Ansprüche 1 bis 11, **dadurch gekennzeichnet, dass** ein körniges Material mit Adsorptionseigenschaften oder Ionen- oder Molekülaustauscheigenschaften in die Ausflockungszone oder stromaufwärts der Ausflockungszone derart eingeführt wird, dass eine ausreichende Kontaktzeit dieses Materials mit dem zu behandelnden Wasser ermöglicht wird.

13. Verfahren nach Anspruch 12, **dadurch gekennzeichnet, dass** das körnige Material mit Adsorptionseigenschaften oder Ionen- oder Molekülaustauscheigenschaften den Ballast bildet.

14. Verfahren nach Anspruch 12, **dadurch gekennzeichnet, dass** das körnige Material mit Adsorptionseigenschaften oder Ionen- oder Molekülaustauscheigenschaften einen zweiten Ballast bildet.

15. Verfahren nach einem der Ansprüche 1 bis 14 **dadurch gekennzeichnet, dass** der Absetzschritt ein lamellarer Absetzschritt ist.

16. Anlage zur Behandlung von Wasser, das mit kolloidalen, gelösten oder Schwebstoff-Verunreinigungen belastet ist, die Folgendes umfasst:

   - mindestens einen Flockungstank (1), der mit mindestens einem Rührwerk (2) versehen ist;
   - eine Rohrleitung (5) für die Zuführung von zu behandelndem Wasser in den Flockungstank (1);
   - einen Absetztank (11) mit einem Auslass (15) des behandelten Wassers im unteren Teil;
   - eine Rohrleitung (21), die den unteren Teil des Absetztanks mit einem Zwischentank (19) verbindet, der mit mindestens einem Rührwerk (20) versehen ist;
   - eine Rohrleitung (25), die den Zwischentank (19) mit einem Hydrozyklon (26) verbindet;
   - eine Rohrleitung (30) für die Rückführung eines Teils des Ablaufs des Hydrozyklons (26) zu dem Zwischentank (19);

   **dadurch gekennzeichnet, dass** sie Folgendes umfasst:

   mindestens einen ersten Sensor (40,40a) zum kontinuierlichen Messen mindestens eines Parameters, der repräsentativ für die Konzentration der Verunreinigungen des Wassers ist, das in die Anlage eintritt;
   einen Rechner (42), der ein kontinuierliches Ableiten aus den im ersten Sensor erfolgten Messungen der Menge an Ballast ermöglicht, die umgesetzt werden muss, um behandeltes Wasser mit einer vorbestimmten Qualität zu erhalten;
   mindestens einen zweiten Sensor (41), der in dem Flockungstank oder in dem Zwischentank oder an der Leitung (25) vorgesehen ist, die den Zwischentank mit dem Hydrozyklon verbindet, die eine kontinuierliche Messung der Ballastkonzentration des Gemisches, das einen davon durchfließt, ermöglicht, und dadurch, dass es der Computer (42) ermöglicht, aus den durch den zweiten Sensor (41) erfolgten Messungen kontinuierlich die Menge an Ballast abzuleiten, die tatsächlich in der Anlage vorhanden ist.

17. Anlage nach Anspruch 16, **dadurch gekennzeichnet, dass** der Rechner (42) geeignet ist, aus den am ersten Sensor (40,40a) erfolgten Messungen die Dosis des Flockungsmittels abzuleiten, die eingesetzt werden muss, um behandeltes Wasser mit der vorbestimmten Qualität zu erhalten.

18. Anlage nach einem der Ansprüche 16 oder 17, **dadurch gekennzeichnet, dass** der erste Sensor (40,40a) ein Sensor ist, der die Konzentration an Schwebstoffen im Rohwasser und/oder die Konzentration organischer Materialien im Rohwasser misst, wie etwa die Konzentration des gesamten organischen Kohlenstoffs des Wassers.

19. Anlage nach einem der Ansprüche 16 bis 18, **dadurch gekennzeichnet, dass** das Absetzbecken (11) an seinem Eingang mit einer Saugbarriere (18) und einer Gleichrichterstruktur der Strömung (17) versehen ist.

20. Anlage nach Anspruch 19, **dadurch gekennzeichnet, dass** die Gleichrichterstruktur der Strömung (17) mindestens zwei Platten (17a) umfasst, die parallel zueinander auf beiden Seiten eines Unterwasserwehrs (16) angeordnet sind, das zwischen dem Flockungstank (1) und dem Absetzbecken (11) vorgesehen ist, und außerdem Platten (17b), die parallel zueinander zwischen den Platten (17a) angeordnet sind, beiderseits des Unterwasserwehrs (16), wobei die Querplatten (17b) mit den Platten (17a) ebenso viele Strömungskanäle zwischen dem Flockungstank (1) und dem Absetzbecken (11) bilden.

21. Anlage nach Anspruch 20, **dadurch gekennzeichnet, dass** sie ein Ventil (34) umfasst, das an der Rohrleitung (30) zum Rückführen eines Teils des Ablaufs des Hydrozyklons (26) zu dem Zwischentank (19) vorgesehen ist, und einen Sensor (43) für die Menge des Gemischs von Schlamm und Ballast, das in dem Zwischentank (19) vorhanden ist.

22. Anlage nach einem der Ansprüche 16 bis 21, **dadurch gekennzeichnet, dass** der Hydrozyklon (26) einen zylindrischen Abschnitt (50) mit zumindest einer tangentialen Zuführung von zu behandelndem Gemisch von Schlamm und Ballast und einen konischen Abschnitt (52) sowie, am Ausgang des konischen Teils, eine Einspritzkammer (53) der Hilfsflüssigkeit mit einem tangentialen Zulauf (54) von Hilfsflüssigkeit aufweist.

23. Anlage nach einem der Ansprüche 16 bis 22, **dadurch gekennzeichnet, dass** sie mindestens einen Verteiler (9a) von Material umfasst, das die Eigenschaften der Adsorption oder des Austauschs von Ionen oder Molekülen in dem Flockungstank aufweist.

24. Anlage nach einem der Ansprüche 16 bis 23, **dadurch gekennzeichnet, dass** das Absetzbecken (11) ein lamellares Absetzbecken ist.

25. Anlage nach einem der Ansprüche 16 bis 24, **dadurch gekennzeichnet, dass** der Flockungstank (1) eine Strömungsführungsstruktur, die an beiden Enden offen und in einem Abstand vom Boden des Tanks (1) angeordnet ist, wodurch eine mittlere Zone (1a), die mit dem Rührwerk (2) versehen ist, und eine Randzone (1b) abgegrenzt werden, sowie eine statische Verteilervorrichtung (4,4a) der Strömung, die aus der Strömungsführungsstruktur austritt, aufweist.

**Claims**

1. Process for treating water filled with dissolved or suspended colloidal impurities, in a treatment plant, including steps consisting of:

   - placing together in a flocculation zone, said water, at least one ballast constituted by at least one insoluble granular material that is heavier than water and at least one flocculating reagent so as to enable the floc to form;
   - introducing the mixture of water and floc thus formed into a settling zone;
   - separating the water treated in the top portion of said settling zone from a sludge and ballast mixture resulting from the settling of said floc;
   - extracting the mixture of sludge and ballast in the bottom portion of said settling zone and routing it to an agitated intermediate mixing zone;
   - extracting the mixture of sludge and ballast present in said intermediate mixing zone and subjecting it to a step of sludge/ballast separation by hydrocyclone separation;
   - recycling the underflow of the hydrocyclone separation step in said flocculation zone;
   - extracting a part of the sludge coming from the overflow of the hydrocyclone separation step and recirculating the other part of said sludge in said agitated intermediate mixing zone;

   **characterised in that** it includes:

   - a step consisting of continuously measuring at least one parameter representing the concentration of impurities in the water before or when it enters said flocculation zone;

- a step consisting of using the results of said measurement thus performed so as to continuously deduce the amount of ballast that needs to be implemented in order to obtain treated water of a predetermined quality.
- a step consisting of continuously measuring the ballast concentration in the mixture extracted from said settling zone or in the mixture present in said flocculation zone;
- a step consisting of deducing, from the continuous measurement of the concentration of mixture extracted from said settling zone, the concentration of ballast actually present in said plant;
- a step consisting of refilling the flocculation zone with ballast when said concentration of ballast actually present in said plant is lower than a predetermined threshold.

2. Process according to claim 1, **characterised in that** it includes a step consisting of using the results of said measurement of said at least one parameter representing the concentration of impurities in the water so as also to deduce the amount of said flocculating reagent that needs to be dispensed into the flocculation zone in order to obtain treated water having said predetermined quality.

3. Process according to any one of claims 1 to 2, **characterised in that** said parameter representing the concentration of impurities in the water is the concentration (X) of the so-called "overall SS" in the water, said so-called "overall SS" concentration being calculating by taking into account all or some of the following parameters:

   - the concentration in said water of suspended solids,
   - the concentration in said water of organic matter,
   - the concentration of microorganisms in the raw water,
   - the concentration of micropollutants in the raw water,
   - said predetermined amount of coagulating reagent,
   - said predetermined amount of reagent intended to adjust the pH.

4. Process according to claim 3, **characterised in that** the amount of ballast that needs to be suspended in the flocculation tank in order to obtain treated water of said predetermined quality is determined by:

   the concentration (Y) of ballast necessary for said so-called "overall SS" concentration (X) calculated according to the formula (I):

$$Y = aX^b + c$$

in which a is between 0.4 and 1, b is between 0.3 and 1 and c is between 0 and 2. and the approximate volume of water present in said plant.

5. Process according to any one of claims 1 to 4, **characterised in that** it includes a step consisting of continuously adjusting the amount of said flocculating reagent dispensed into said flocculation zone according to said concentration of ballast that needs to be implemented in order to obtain treated water of a predetermined quality.

6. Process according to any one of claims 1 to 5, **characterised in that** it includes a step consisting of adjusting the flow rate of the sludge coming from the overflow of the hydrocyclone separation step, recirculated to said intermediate mixing zone so as to maintain a predetermined level of sludge and ballast in said intermediate mixing zone.

7. Process according to claim 6, **characterised in that** it includes a step consisting of storing the sludge coming from the overflow of the hydrocyclone separation step in a tank having an overflow pipe, measuring the level of sludge and ballast mixture present in the intermediate mixing zone, and releasing at least some of said tank into said intermediate mixing zone when the measured value is lower than a predetermined threshold.

8. Process according to any one of claims 1 to 7, **characterised in that** said step of hydrocyclone separation of the sludge and ballast mixture coming from said settling zone is performed by implementing an injection of additional liquid tangentially to said sludge with said additional liquid being injected in an amount corresponding to 5 to 100% by volume, and typically 5 to 20% of the volume of the sludge and ballast mixture introduced in the hydrocyclone separation step.

9. Process according to any one of claims 1 to 8, **characterised in that** said step consisting of contacting, in a flocculation zone, said water, at least one ballast constituted by at least one insoluble granular material heavier than water, and at least one flocculating reagent in order to allow floc to form, includes:

   - a step consisting of defining, in the flocculation zone, by means of a fully immersed flow-guide structure, an internal zone in which, by agitation, a turbulent axial flow is created of the mixture of the water to be treated, the ballast and the flocculant in an axial direction of said flow-guide structure,

- a step consisting of injecting said flocculating reagent by means of a hydraulic distribution device in said axial flow,
- a step consisting of distributing this flow, by means of a static device opposing the rotation of said flow and arranged at the outlet of this flow-guide structure;
- a step consisting of allowing said mixture to circulate in a peripheral zone surrounding said flow-guide structure, in an opposite direction up to the inlet of said internal zone; and
- a step consisting of moving said mixture to said settling zone.

10. Process according to claim 9, **characterised in that** it includes a step consisting of converting the flow leaving said flow-guide structure into an axial flow by means of a flow-distributing static device.

11. Process according to any one of claims 1 to 10, **characterised in that** said step consisting of converting the flow leaving said flow-guide structure into an axial flow by means of a flow-distributing static device is performed within the actual flow-guide structure.

12. Process according to any one of claims 1 to 11, **characterised in that** a granular material with adsorption properties, or a granular material with ion or molecule exchange properties, is introduced into the flocculation zone or upstream of the flocculation zone so as to allow for a sufficient contact time of said material with the water to be treated.

13. Process according to claim 12, **characterised in that** said granular material with adsorption properties, or ion or molecule exchange properties, constitutes said ballast.

14. Process according to claim 12, **characterised in that** said granular material with adsorption properties, or ion or molecule exchange properties, constitutes a second ballast.

15. Process according to any one of claims 1 to 14, **characterised in that** said settling step is a lamellar settling step.

16. Plant for treating water filled with dissolved or suspended colloidal impurities including:

- at least one flocculation tank (1) provided with at least one agitator (2);
- a pipeline (5) supplying water to be treated in said flocculation tank (1);
- a settling tank (11) provided with a discharge outlet (15) for the treated water in the bottom portion;
- a pipeline (21) connecting the bottom portion of the settling tank to an intermediate tank (19) provided with at least one agitator (20);
- a pipeline (25) connecting said intermediate tank (19) to a hydrocyclone (26);
- a pipeline (30) for recirculation of some of the overflow of the hydrocyclone (26) to said intermediate tank (19);

**characterised in that** it includes:

at least one first sensor (40, 40a) intended to continuously measure at least one parameter representing the concentration of impurities in the water entering said plant;
a calculator (42) making it possible to continuously deduce, from measurements taken by said first sensor, the amount of ballast that must be implemented in order to obtain treated water of a predetermined quality;
at least one second sensor (41) provided in said flocculation tank or in said intermediate tank or at the level of said pipeline (25) connecting said intermediate tank to said hydrocyclone making it possible to continuously measure the ballast concentration in the mixture passing through one of them, and **in that** said calculator (42) makes it possible to continuously deduce, from the measurements taken by said second sensor (41), the amount of ballast actually present in said plant.

17. Plant according to claim 16, **characterised in that** said calculator (42) makes it possible to continuously deduce, from measurements taken by said first sensor (40, 40a) the amount of said flocculating reagent that needs to be implemented in order to obtain treated water of a predetermined quality.

18. Plant according to any one of claims 16 or 17, **characterised in that** said first sensor (40, 40a) is a sensor measuring the concentration in the raw water of suspended solids and/or the concentration in the raw water of organic matter such as the concentration of total organic carbon in said water.

19. Plant according to one of claims 16 to 18, **characterised in that** said settling tank (11) is equipped at its inlet with a siphoniform partition (18) and with a splitting structure (17).

20. Plant according to claim 19, **characterised in that** said splitting structure (17) includes at least two plates (17a) parallel to one another arranged on each side of a submerged spillway (16) provided between the flocculation tank (1) and the settling tank (11), and plates (17b) arranged parallel to one another between the plates (17a), overlapping said spillway (16), said transverse plates (17b) constituting, with the plates (17a), the same number of flow channels between the flocculation tank (1) and the settling tank (11).

21. Plant according to claim 20, **characterised in that** it includes a valve (34) provided on said pipeline (30) for recirculation of some of the hydrocyclone (26) overflow to said intermediate tank (19), and a sensor (43) that senses the level of the sludge and ballast mixture present in said intermediate tank (19).

22. Plant according to any one of claims 16 to 21, **characterised in that** said hydrocyclone (26) has a cylindrical portion (50) provided with at least one tangential supply of the sludge and ballast mixture to be treated and a conical portion (52), and, at the outlet of the conical portion, an additional liquid injection chamber (53) having a tangential supply (54) of additional liquid.

23. Plant according to any one of claims 16 to 22, **characterised in that** it includes at least one dispenser (9a) of a material having ion or molecule exchange or adsorption properties in said flocculation tank.

24. Plant according to any one of claims 16 to 23, **characterised in that** said settling tank (11) is a lamellar settling tank.

25. Plant according to any one of claims 16 to 24, **characterised in that** said flocculation tank (1) comprises a flow-guide structure, open at its two ends and arranged at a distance from the base of said tank (1) defining a median zone (1a) equipped with said agitator (2) and a peripheral zone (1b) and a static device (4, 4a) distributing the flow leaving said flow-guide structure.

Fig. 1

Fig. 2

Fig. 3

Fig. 4

Fig. 5

EP 2 108 005 B1

Fig. 6

Fig. 7          Fig. 8          Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2627704 A
- FR 2719234 A
- WO 03053862 A